# EUROPEAN PATENT APPLICATION

(11) **EP 1 527 968 A2**
(43) Date of publication of application: **04.05.2005**
(21) Application number: 04015763.8
(22) Date of filing: 05.07.2004
(51) Int. Cl.: B60S 3/06, B60S 3/04

(54) **Improved car wash installation and corresponding process for washing**

(30) Priority: 29.10.2003 IT PC20030048
(71) Applicant: AUTOEQUIP LAVAGGI S.R.L., I-14059 Vesime (AT) (IT)
(72) Inventor: Marengo, Ferruccio, 14059 Vesime (AT) (IT); Molinari, Roberto, 14050 Cessole (AT) (IT)
(74) Representative: La Ciura, Salvatore

(57) **Abstract**

An improved car wash installation comprising:
- a first gantry (1) fitted with:
   - systems (3) for spraying a pre-washing liquid such as an emollient;
   - means (5) which move along vertical guides (4) and which are designed to scan the contours of a vehicle;
   - drying devices (7,8) designed to direct jets of pressurised air laterally and downwards onto the vehicle, and
- a second gantry (2) to fitted with:
   - a vertical brush unit (14) associated with means (16) for spraying high-pressure jets of water which are located on both sides of the gantry;
   - a horizontal brush unit (18) associated with means (16) designed to spray water at high pressure onto the vehicle;
wherein said means (16) designed to spray water at high pressure are installed immediately upstream of the corresponding brushes (14,18) so that they engage the vehicle first during the forward pass of the gantry (2).
This characteristic makes the washing cycle much shorter than those of known car washes, because the entire car washing and drying cycle can be performed with a single forward and reverse pass of the two gantries (1,2).

## Description

This invention relates to an improved car wash installation and the corresponding process.

In particular, the invention relates to the double-gantry type of car wash, in which high-pressure water-spraying devices are fitted to the gantry where the brushes are located and not, as in known car washes, on the gantry where the drying devices are located.

This characteristic makes the washing cycle much shorter than those of known car washes, because the entire car washing and drying cycle can be performed with a single forward and reverse pass of the two gantries.

Vehicle washing installations, and in particular car washes, are divided into two main categories: fixed-gantry installations, in which the vehicle advances successively to the washing and drying systems, and mobile-gantry installations, in which the vehicle remains stationary on a track along which one or more gantry structures move on rails, systems for spraying washing liquids, brushes and vehicle drying devices being fitted to said gantries.

The present invention relates to this second type of car wash.

According to the state of the art, single-gantry and multiple-gantry, and especially double-gantry car washes are known.

In a typical single-gantry car wash the following parts are fitted to the structure, in the order listed:
- a horizontal brush, fitted on guides which allow it to move up and down;
- a lateral high-pressure water-spraying unit associated with a wheel-washing device;
- a lateral drying unit which directs pressurised air onto the vehicle from two slits at the sides of the track;
- a horizontal high-pressure water-spraying unit, fitted to a support which slides along vertical guides in such a way as to follow the contours of the car, a horizontal drying device that directs a stream of pressurised air downwards also being fitted to said support;
- a pair of vertical brushes.

This type of installation has the advantage of being more compact, but involves rather long washing times, because a minimum cycle of six passes is required, namely:
- first forward pass with spraying of emollient;
- first reverse pass with horizontal and lateral high-pressure water spraying;
- second forward pass and second reverse pass, in which the horizontal and vertical brushes mechanically remove dirt from the vehicle;
- third forward and reverse pass for drying of vehicle.

The need for higher productivity and therefore a reduction in the duration of the washing cycle has led to the use of double-gantry units, which offer a considerable time saving because the washing cycle of a new vehicle can start while the drying devices, fitted to a separate gantry, are still drying the last vehicle washed.

Double-gantry units comprise a first gantry, called the "drying gantry", to which are fitted wheel-washing devices, arches for spraying and distribution of an emollient liquid, lateral and upper pressurised water spraying arches, and devices which direct horizontal and vertical air streams against the vehicle for drying.

The second gantry, called the "washing gantry", comprises vehicle wetting, rinsing and waxing liquid distribution arches and horizontal and vertical brushes.

With this type of known plant, the cycle comprises:
- a first drying pass of the gantry, during which emollient is sprayed onto the vehicle;
- a first reverse pass of the same gantry, with high-pressure spraying of washing water;
- a second forward pass, during which both the gantries move together, with operation of the wheel washers and the lateral high-pressure water-spraying systems fitted to the drying gantry, followed by shampoo distribution and brushing by the devices fitted to the washing gantry;
- the last stage is the reverse of the two gantries, with brushing followed by rinsing water dispensed by the washing gantry, and finally a slow drying stage performed by the devices fitted to the drying gantry.

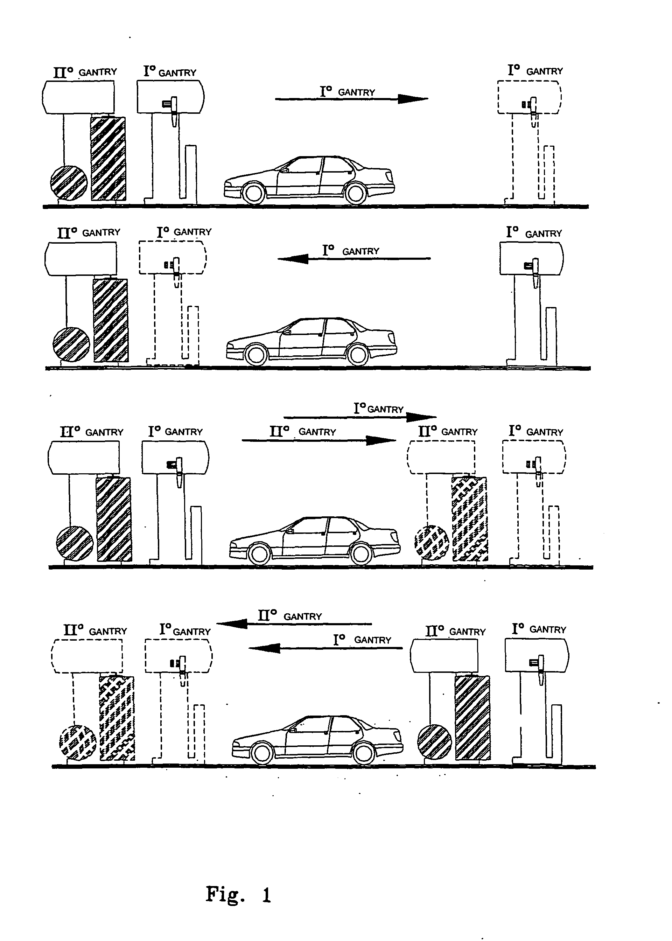

These four stages are shown schematically in Figure 1, in which the continuous line shows the gantries in the starting position and the broken line shows them in the finishing position.

The need to shorten washing times still more in order to satisfy customers and obtain a faster return on the cost of the installations has generated a need for systems which further reduce the duration of the washing cycle.

This problem is solved by the present invention, which offers an improved double-gantry car wash, characterised in that the high-pressure spraying units are not fitted on the drying gantry, as in known installations, but on the washing gantry.

This enables the working cycle to be optimised, and leads to a drastic reduction in the time required.

This invention will be better understood from the detailed description that follows, provided by way of example but not of limitation, by reference to the annexed figures wherein:
- figure 2 is a schematic side view of a car wash according to the invention;
- figure 3 is a schematic side view of a further preferred embodiment of a car wash according to the invention.

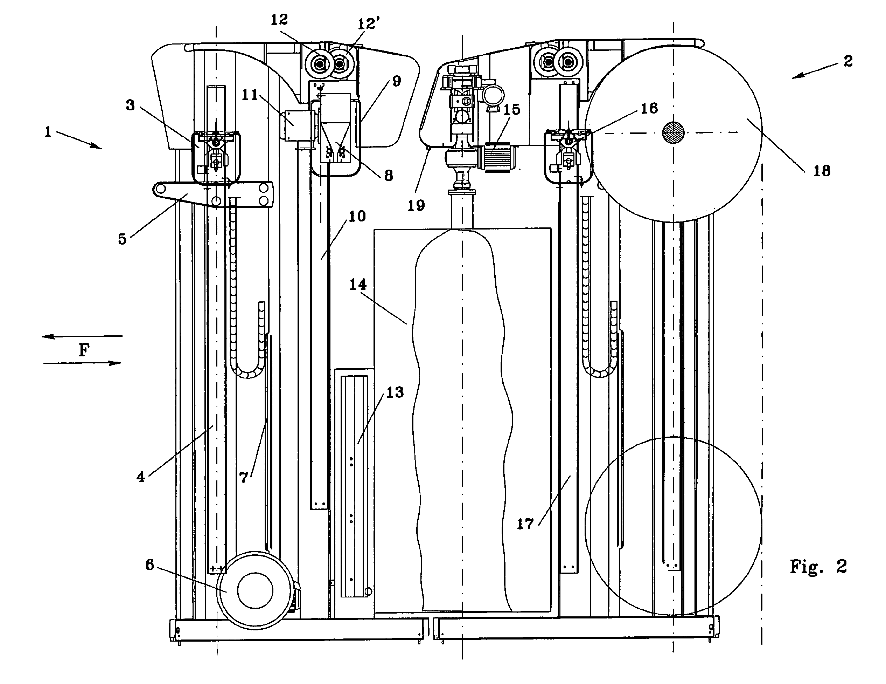

In figure 2, the car wash according to the invention comprises a drying gantry 1 and a washing gantry 2, which move in the direction of arrow F along a track on which the vehicles to be washed are positioned.

Drying gantry 1 is fitted with an emollient product spraying arch 3, which moves along vertical guides 4. A scanning device 5 equipped with through-beam photocells also runs along said guides; said photocells detect and store the contours of the vehicle with the aid of a pair of encoders, not illustrated, which detect the position of the photocells moment by moment.

Said encoders, which are connected to the motors that move the gantry along the track and move support 3 along guides 4, send data to a control computer which will be associated with the data obtained from the photocells to determine the contours of the vehicle.

A wheel-washing device 6, a lateral drying device 7 and a horizontal drying unit 8, mounted on a support 9 which runs along a pair of vertical guides 10, are also fitted to gantry 1.

No. 11 indicates the motor of horizontal drying unit 8, while nos. 12 and 12' indicate the pulleys designed to raise units 3 and 9 respectively.

A lateral high-pressure system 13 which sprays water from each side of the track, a pair of vertical brushes 14 driven by motors 15, and a horizontal unit 16 for spraying pressurised water, which moves along vertical guides 17 controlled so that it follows the contours of the vehicle according to the data recorded by the through-beam photocells on gantry 1, are fitted to washing unit 2, in that order. Finally, the washing gantry is fitted with a horizontal brush 18, which also moves in a vertical direction.

A plurality of nozzles 19 for spraying wax or a polishing product are also fitted to gantry 2.

Washing begins with the vehicle positioned opposite the drying gantry; the gantries move successively, travelling along the section of track where the vehicle is parked, first in one direction and then in the opposite direction.

The washing cycle comprises the following stages:

### 1) forward pass:

- spraying of an emollient or detergent product by spraying arch 3 and simultaneous scanning of the vehicle profile by photocells 5, which move along guides 4;
- wheel washing by unit 6, with spraying of a special detergent and brushing;
- spraying of high-pressure washing water by lateral spraying devices 13 to remove debris and parts which could scratch the bodywork as a result of the mechanical action of the brushes;
- washing of the sides of the vehicle by vertical brushes 14;
- high-pressure spraying of washing water by horizontal unit 16;
- washing and brushing performed by horizontal brush 18;

### 2) reverse pass:

- brushing by horizontal brush 18;
- brushing of sides by vertical brushes 14;
- spraying of wax or a polishing product by nozzles 19;
- drying by horizontal drying unit 9 and subsequently by vertical drying unit 7.

The cycle described above could also include variations of secondary importance. For example, the stage of spraying the polishing product or the emollient product, or the specific wheel washing stage, could be omitted.

However, it is important, according to the invention, for the high-pressure water spraying devices to be located downstream of the drying systems and upstream of the corresponding brushes.

To ensure the efficacy of washing, the high-pressure water spraying units must be fitted to the washing gantry. If the high-pressure units, such as unit 13 shown in figure 1, were always fitted downstream of drying but on the drying gantry, water spraying would take place immediately after distribution of the emollient, which would be washed off before it had time to perform its action in depth. Equally, if the high-pressure spraying devices were positioned too close to the drying unit, water might be sprayed onto the air outlets, and this water would then be conveyed onto the vehicle to be dried.

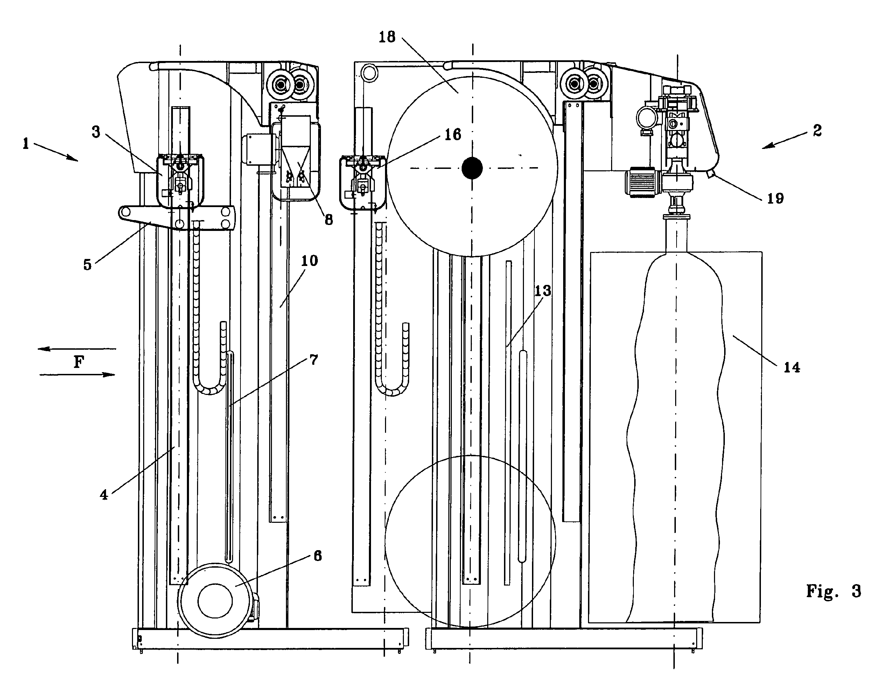

According to a further preferred version of the same solution idea, illustrated in figure 3, the positions of the high-pressure units and the washing brushes on the washing gantry can be reversed.

As clearly shown in the figure, the gantry can be fitted with a horizontal high-pressure unit which moves on vertical guides, a horizontal brush, a lateral high-pressure unit and vertical brushes, in that order.

In this case, the washing cycle would be modified as follows:

### 1) forward pass:

- spraying of an emollient or detergent product by spraying arch 3 and simultaneous scanning of the vehicle profile by photocells 5, which move along guides 4;
- wheel washing by unit 6, with spraying of a special detergent and brushing;
- high-pressure spraying of washing water by horizontal unit 16;
- washing and brushing performed by horizontal brush 18;
- high-pressure spraying of washing water by lateral spraying devices 13;
- washing of the sides of the vehicle by vertical brushes 14;

### 2) reverse pass:

- brushing of sides by vertical brushes 14;
- brushing by horizontal brush 18;
- spraying of wax or a polishing product by nozzles 19;
- drying by horizontal drying unit 8 and subsequently by vertical drying unit 7.

As will be clear from the above description, the car wash according to the invention considerably shortens vehicle washing times, thus increasing the productivity of the installation and reducing waiting times for customers.

An expert in the field could devise various modifications and variations, all of which should be deemed to fall within the ambit of this invention.

## Claims

1. Improved double-gantry car wash installation, **characterised in that** high-pressure washing water spraying systems are fitted downstream of the drying devices and upstream of the corresponding brushes.

2. Improved car wash installation as claimed in claim 1, of the type comprising a gantry to which the drying systems are fitted and a gantry to which the washing brushes are fitted, **characterised in that** the high-pressure washing water spraying devices are fitted on the washing gantry.

3. Improved car wash installation as claimed in claim 2, **characterised in that** it comprises:
• a first gantry fitted with:
- systems for spraying a pre-washing liquid such as an emollient;
- means which move along vertical guides and which are designed to scan the contours of a vehicle;
- drying devices designed to direct jets of pressurised air laterally and downwards onto the vehicle, and
• a second gantry to fitted with:
- a vertical brush unit associated with means for spraying high-pressure jets of water which are located on both sides of the gantry;
- a horizontal brush unit associated with means designed to spray water at high pressure onto the vehicle;
wherein said means designed to spray water at high pressure are installed immediately upstream of the corresponding brushes so that they engage the vehicle first during the forward pass of the gantry.

4. Improved car wash installation as claimed in claim 3, **characterised in that** the following units are fitted to said washing gantry, in the order listed:
- a lateral high-pressure water spraying unit;
- a pair of vertical lateral brushes;
- a horizontal high-pressure water spraying unit;
- a horizontal brush unit.

5. Improved car wash installation as claimed in claim 3 or 4, **characterised in that** said horizontal high-pressure spraying systems and said horizontal brush are fitted on supports which slide along substantially vertical guides and which are fitted with means designed to receive information about the contours of the vehicle from said scanning devices and regulate the height of said spraying devices and said brushes accordingly.

6. Improved car wash installation as claimed in any of the preceding claims, **characterised in that** it includes means designed to spray a product such as wax, a surfactant or the like onto the vehicle, said means being located on the washing gantry, upstream of the brushes.

7. Process for washing vehicles by means of an installation as claimed in any of the preceding claims, **characterised in that** it includes the following stages:
- spraying of an emollient or detergent product and simultaneous scanning of the contours of the vehicle;
- high-pressure spraying of washing water by lateral spraying devices 13;
- washing of the sides of the vehicle by vertical brushes 14;
- high-pressure spraying of washing water by a horizontal unit 16;
- washing and brushing by a horizontal brush 18;
- brushing by said horizontal brush 18 which moves in the opposite direction to the previous one;
- brushing of the sides by vertical brushes 14, which move in the opposite direction to the previous one;
- drying by a horizontal drying unit 8 and subsequently by a drying vertical unit 7.

8. Process for washing of vehicles by a car wash installation as claimed in any of the preceding claims, **characterised in that** it includes the following stages:
- spraying of an emollient or detergent product and simultaneous scanning of the contours of the vehicle by photocells 5;
- high-pressure spraying of washing water by a horizontal unit 16;
- washing and brushing by a horizontal brush 18;
- high-pressure spraying of washing water by lateral spraying devices 13;
- washing of the sides of the vehicle by vertical brushes 14;
- brushing of the sides by said vertical brushes 14, which move in the opposite direction to the previous one;
- brushing by said horizontal brush 18 which moves in the opposite direction to the previous one;
- drying by a horizontal drying unit 8 and subsequently by a drying vertical unit 7.

9. Vehicle washing process as claimed in either of claims 7 or 8, **characterised in that** it includes a stage involving spraying of wax or a finishing product before the drying stage.

10. Vehicle washing process as claimed in claim 9, **characterised in that** it includes a wheel washing stage during the emollient spraying stage.
